# EUROPÄISCHE PATENTSCHRIFT

(11) **EP 4 200 111 B1**
(45) Veröffentlichungstag und Bekanntmachung des Hinweises auf die Patenterteilung: **04.09.2024**
(21) Anmeldenummer: 21740108.2
(22) Anmeldetag: 15.07.2021
(51) Int. Cl.: B29B 9/06, B29B 9/12, B29B 9/16, B29C 48/00, B29C 48/02, C08J 9/00, C08J 9/16, B01J 2/20, B29K 479/00, B29K 481/00

(54) **HERSTELLUNG VON GRANULATEN AUF BASIS VON HOCHTEMPERATUR-POLYMEREN MITTELS UNTERWASSERGRANULIERUNG BEI ERHÖHTER WASSERTEMPERATUR**
MANUFACTURE OF GRANULES BASED ON HIGH-TEMPERATURE POLYMERS BY UNDERWATER PELLETIZATION AT AN ELEVATED TEMPERATURE OF THE WATER
FABRICATION DES GRANULÉS À BASE DE POLYMÈRES HAUTE TEMPÉRATURE PAR GRANULATION SOUS L'EAU À TEMPÉRATURE ÉLEVÉE DE L'EAU

(30) Priorität: 18.08.2020 EP 20191446
(43) Veröffentlichungstag der Anmeldung: 28.06.2023
(73) Patentinhaber: Evonik Operations GmbH, 45128 Essen (DE)
(72) Erfinder: TRASSL, Christian, 95485 Warmensteinach (DE); NIEPERT, Melanie, 60385 Frankfurt (DE); HOPF, Florian, 63263 Neu Isenburg (DE); HOLLEYN, Denis, 65719 Hofheim am Taunus (DE); GANGLAUF, Mona, 64739 Hoechst (DE)
(74) Vertreter: Evonik Patent Association
(86) Internationale Anmeldenummer: PCT/EP2021/069689
(87) Internationale Veröffentlichungsnummer: WO 2022/037857

(56) Entgegenhaltungen:
- EP-A1- 2 565 224
- WO-A1-2005/056653
- WO-A1-2011/134996
- WO-A1-2019/025245
- WO-A1-2019/101667
- WO-A1-2020/161012
- DE-A1- 102014 216 992

## Beschreibung

### Gebiet der Erfindung

Die vorliegende Erfindung betrifft ein Verfahren zur Herstellung von Partikel(Hart)schaumstoffen aus mindestens einem Polymer mit einer Glasübergangstemperatur nach ISO 11357-2 von mindestens 180°C aus einer Polymerisatzusammensetzungen mittels einer Unterwassergranulierung.

### Stand der Technik

Technische Kunststoffe können nach dem Stand der Technik aufgrund ihrer hohen Verarbeitungstemperaturen nur mittels Stranggranulierung verarbeitet werden. Die darüber erhaltenen zylindrischen Granulatkörper weisen scharfe Kanten auf. Bei Transport und Weiterverarbeitung führen diese scharfen Kanten zu einer vermehrten Staub- und Feinpartikel-Bildung, die entsprechende Arbeitsschutzmaßnahmen erfordern. Zudem ist die Qualität des Granulats vermindert, da es Beschädigungen der Granulatoberflächen, wie zum Beispiel Mikrorisse, kommen kann.

Mit der in WO2005/056653 beschrieben Unterwassergranulierung werden diese Probleme teilweise gelöst. Allerdings weisen die Granulate aus diesem Verfahren einen erhöhten Anteil an Fehlstellen an der Oberfläche (Dellen) auf, teilweise sogar Fehlstellen im Inneren des Granulats (Vacuolen).

Um minderwertiges Granulat abzutrennen werden aufwendige Sortierverfahren nachgeschaltet. Die EP3377288 und EP2361174 beschreiben Verfahren zur Herstellung eines Kunststoffgranulats mittels Unterwassergranulierung in einer Prozesskammer, in der die Prozessflüssigkeit eine Temperatur über 120°C bei einem Prozessdruck von mindestens 2,0 bar aufweist. Die Qualität der Kunststoffgranulate ist jedoch für viele Anwendungen nicht ausreichend.

Grundsätzlich gibt es verschiedene Vorgehen zur Herstellung von Partikelschäumen.

Die WO2019/038213 beschreibt ein Verfahren bei der eine Zusammensetzung aus 80 bis 99,5 Gew% PEI, 0,5 bis 10 Gew% Treibmittel und 0 bis 10 Gew% Additiven mittels eines Extruders mit Lochplatte zu einem geschäumten bzw. schäumbaren Granulat verarbeitet wird. Dabei liegen die Temperaturen zwischen Einzugszone und Schneckenspitze bevorzugt in einem Bereich zwischen 320 und 400 °C. Weiterhin liegt zumeist keine einheitliche Temperatur über diese Strecke vor, sondern beispielsweise ein Gradient mit steigender Temperatur in Förderrichtung der Polymerschmelze. Die Temperatur der Lochplatte liegt dabei zwischen 250 und 350 °C und die Massetemperatur beim Austritt durch die Lochplatte zwischen 230 und 360 °C. In dem Extruder erfolgt dabei in der Regel die Beladung mit dem Treibmittel. Das Granulat schäumt dann beim Austritt aus der Lochplatte auf, sofern der Druck in der Unterwassergranulierung geringer ist als die Expansionskraft des Treibmittels. Das expandierte Granulat wird dann bevorzugt anschließend zu einem Partikelschaum-Formteil weiterverarbeitet. Da diese Schaumperlen üblicherweise eine sehr geringe Dichte aufweisen, wirkt sich das genannte Verfahren vor allem in Bezug auf einen wirtschaftlichen Transport negativ aus. Zudem müssen expandierte Partikelschäume bei der Verarbeitung zu Formteilen zur Vermeidung von Fehlstellen und Hohlräumen stets komprimiert werden was zwangsläufig zu einer Erhöhung der Dichte und damit Verringerung des Leichtbaupotenzials führ.

In der WO 2019/025245 wird ein Verfahren zur Herstellung von expandierbaren, treibmittelhaltigen Granulaten auf Basis von Hochtemperaturthermoplasten beschrieben. Dabei erzeugt man eine Polymerschmelze durch das Aufschmelzen von einem Polymer mit einer Glasübergangstemperatur von mindestens 180°C und Vermischen mit mindestens einem Nukleierungsmittel in einem Extruder bei Temperaturen zwischen 300°C und 350°C. Nach der Zugabe des Treibmittels zu der Polymerschmelze wird diese auf Temperaturen zwischen 180°C und 250°C abgekühlt, durch eine Lochplatte gefördert granuliert in einem Unterwassergranulator mit einer Wassertemperatur zwischen 75°C und 99°C.

Die notwendige Düsentemperatur ist sehr hoch im Verhältnis zur üblichen Wassertemperatur, die kleiner 100°C ist. Dadurch kommt es zu einem Abkühleffekt der Düse und damit zur Gefahr des Einfrierens der Polymerschmelze in der Düse vor allem beim Anfahren des Prozesses.

In dem Artikel "Brillianten aus dem Reaktor", von Gloeckner und Müller, veröffentlicht in der Kunststoffe, 2, 2016, wird ein neues Verfahren beschrieben, das das Einfrieren der Polymerschmelze in der Düse des Extruders verhindern soll. In dem Artikel werden verschieden Kunststoffe genannt. Die Herstellung von Partikelschäumen, insbesondere aus treibmittelbeladenen Polymerschmelzen wird jedoch nicht diskutiert.

### Aufgabe

Aufgabe der vorliegenden Erfindung war es im Hinblick auf den Stand der Technik ein neues Granulierungsverfahren für Hochtemperatur-Partikelschäume zur Verfügung zu stellen.

### Lösung

Gelöst wird die Aufgabe durch das zur Verfügung stellen eines Verfahrens nach Anspruch 1 zur Herstellung von Partikel(Hart)schaumstoffen mittels einer Unterwassergranulierung aus einer Polymerisatzusammensetzung mit mindestens einem Polymer, welches eine Glasübergangstemperatur nach ISO 11357-2 (Veröffentlichung: 2014-07) von mindestens 180°C aufweist, wobei die Polymerschmelze des Extruders
a) in einen unter Druck stehenden ersten Wasserkreislauf gefördert wird, wobei der Druck im Bereich von 0,2 bis 30 bar und die Wassertemperatur im Wasserkreislauf im Bereich von 105°C bis 180°C liegt, und
b) granuliert wird,
   dadurch gekennzeichnet, dass
c) das Granulat einem zweiten Wasserkreislauf zugeführt wird, der eine Temperatur unter 100°C aufweist und
   1) drucklos oder
   2) unter einem Druck im Bereich von 0,2 bis 30 bar betrieben wird.

Erfindungsgemäss wird die Polymerisatzusammensetzung beim Austritt aus dem Extruder in einen Unterwassergranulator geleitet.

Dieser Unterwassergranulator ist dabei derart bezüglich einer Kombination aus Temperatur und Druck ausgelegt, dass ein geschlossenes System vorliegt. Erfindungsgemäß beträgt die Temperatur des ersten Wasserkreislaufs 100°C bis 200°C. Durch dieses Vorgehen wird die große Temperaturdifferenz zwischen Polymerschmelze und Prozesswassertemperatur des Unterwassergranulators minimiert. Die im Stand der Technik beschriebene Gefahr des Einfrierens der Polymerschmelze an der Düse kann somit verhindert werden.

Bei herkömmlichen Verfahren wird die Polymerschmelze aus dem Extruder einer Unterwassergranulierung zugeführt, die bei einer Wassertemperatur unter 100°C betrieben wird. Dies führt zu einer schlagartigen Abkühlung des Granulats. Die Granulatkörner bilden daher Dellen an der Oberfläche des Granulats oder Vacuolen aus.

Überraschend wurde gefunden, dass die erfindungsgemäße Verfahrensführung dazu führt, dass das erhöhte Temperaturniveau im ersten Wasserkreislauf dazu führt, dass die Bildung von Dellen oder Vacuolen verhindert werden können.

Erfindungsgemäß wird der unter Druck stehenden erste Wasserkreislauf bei einem Druck im Bereich von 0,2 bis 30 bar, bevorzugt bei 5 bis 30 bar, besonders bevorzugt bei 3 bis 10 bar betrieben. Die Wassertemperatur im ersten Wasserkreislauf liegt bei 105°C bis 180°C, bevorzugt bei 115°C bis 180°C.

Das geschlossene Wasserkreislaufsystem unter Druck ermöglicht das Arbeiten bei höheren Wassertemperaturen, bei gleichzeitiger Reduzierung der Belastung des Bedienpersonals durch Heißwasserdämpfe.

Die Granulierung erfolgt im ersten Wasserkreislauf. Somit werden die im Stand der Technik genannten Nachteile der Staubbildung und Qualitätsminderung des Granulats durch Zerkratzen und scharfe Abschlagkanten verhindert.

Erfindungsgemäß wird das erhaltene Granulat einem zweiten Wasserkreislauf zugeführt, der eine Temperatur unter 100°C aufweist und drucklos, alternativ bei einem Druck von 0,2 bis 30 bar, betrieben wird.

Wird der zweite Wasserkreislauf gemäß Verfahrensschritt c) 2) unter Druck betrieben, wird vor der Abtrennung des Granulats vom Prozesswasser das Druckniveau auf Umgebungsdruck abgesenkt. Das erhaltene Granulat kann einer Trocknung zugeführt werden.

Die Trocknung kann mit herkömmlichen Trocknern durchgeführt werden. Beispielsweise eignen sich hierzu Zentrifugaltrockner, Umlufttrockner, Drucklufttrockner, Pralltrockner, Bandtrockner, Adsorptionstrockner, Rotierende Trommeln mit Infrarotbeheizung oder Trockner mit Molekularsieben.

Eine alternative nicht-erfindungsgemässe Verfahrensvariante sieht vor, dass nach den Verfahrensschritten a) und b) das erhaltene Granulat direkt aus dem mit Druck beaufschlagten ersten Kreislauf ausgeschleust und einer Trocknung zugeführt wird. Dies ist insbesondere von Interesse, wenn das erhaltene Granulat auf höherem Temperaturniveau weiter behandelt werden soll.

In einer weiteren Variante der erfindungsgemässen Ausführungsform kann eine mit Treibmittel beladene Polymerisatzusammensetzung, mittels Extruder verarbeitet werden.

In dieser Variante wird die Polymerisatzusammensetzung beim Austritt aus dem Extruder in den erfindungsgemäßen Unterwassergranulator geleitet.

Dieser ist dabei derart bezüglich einer Kombination aus Temperatur und Druck ausgelegt, dass ein Schäumen verhindert wird, beispielsweise indem die Temperatur in Schritt a) mindestens 5°C unter Tg der treibmittelbeladenen Polymerschmelze liegt. Durch dieses Vorgehen erhält man ein mit Treibmittel beladenes Granulat, welches später durch erneute Energiezufuhr auf die gewünschte Dichte aufgeschäumt und/oder unter optionaler Formgebung zu einem Partikelschaumwerkstück weiterverarbeitet werden kann.

Der im ersten Wasserkreislauf vorliegende Druck, auch als Gegendruck bezeichnet, unterbindet das Sieden des Treibmittels und verhindert somit das Aufschäumen der Granulate.

Die für dieses Verfahren geeigneten Treibmittel sind aus der Gruppe bestehend aus flüchtigen organischen Verbindungen mit einem Siedepunkt bei Normaldruck unterhalb der Glasübergangstemperatur des Basismaterials, anorganischen Treibmitteln, thermisch zersetzbaren Treibmitteln und Mischungen der vorgenannten ausgewählt.

Vorzugsweise wird die flüchtige organische Verbindung mit einem Siedepunkt bei Normaldruck unterhalb der Glasübergangstemperatur des Basismaterials und bei Normaltemperatur (i.e. 25 °C, 1013 mbar) flüssig vorliegend, aus der Gruppe bestehend aus nicht-halogenierten Kohlenwasserstoffen, Ketonen, Alkoholen, halogenierten Kohlenwasserstoffen und Mischungen der vorgenannten ausgewählt.

Bevorzugt wird das Keton aus Aceton, Methylethylketon, Cyclohexanon, Cyclononanon, Diacetonalkohol und Mischungen der vorgenannten ausgewählt. Mehr bevorzugt wird das Keton aus Aceton, Methylethylketon und Mischungen der vorgenannten ausgewählt.

Geeignete Polymere mit einer Glasübergangstemperatur nach ISO 11357-2 von mindestens 180°C sind ausgewählt aus der Gruppe Polysulfone oder Polyimide, insbesondere Polyethersulfon (PESU), Polyphenylsulfon (PPSU), Polysulfon (PSU), Polyetherimid (PEI), thermoplastische Polyimide und Mischungen davon. Geeignet sind auch Partikelschäume auf Basis eines Blends aus PEI und Polyetheretherketon (PEEK).

Angegebene Glasübergangstemperaturen werden erfindungsgemäß - wenn nicht anders ausgeführt - mittels DSC (Differential Scanning Calorimetry) gemessen. Der Fachmann weiß dazu, dass die DSC nur ausreichend aussagekräftig ist, wenn nach einem ersten Aufheizzyklus bis zu einer Temperatur, die minimal 25 °C oberhalb der höchsten Glasübergangs- bzw. Schmelztemperatur, dabei jedoch mindestens 20 °C unterhalb der tiefsten Zersetzungstemperatur eines Materials liegt, die Materialprobe für mindestens 2 min bei dieser Temperatur gehalten wird. Danach wird wieder auf eine Temperatur, die mindestens 20 °C unterhalb der tiefsten zu bestimmenden Glasübergangs- oder Schmelztemperatur liegt, abgekühlt, wobei die Abkühlrate maximal 20 °C / min, bevorzugt maximal 10 °C / min betragen sollte. Nach einer weiteren Wartezeit von wenigen Minuten erfolgt dann die eigentliche Messung, bei der mit einer Aufheizrate von in der Regel 10 °C / min oder weniger die Probe bis mindestens 20 °C über die höchste Schmelz- oder Glasübergangstemperatur erhitzt wird.

In einer weiteren erfindungsgemässen Verfahrensvariante zur Herstellung eines Partikelschaums wird eine entsprechende Polymerisatzusammensetzung ein Nukleierungsmittel enthaltend, verarbeitet. Dieses optionale Nukleierungsmittel wird vorzugsweise aus der Gruppe bestehend aus Talkum, Graphit, Ruß, Titandioxid und Mischungen der vorgenannten ausgewählt. Das optionale Nukleierungsmittel verbessert vorteilhafterweise die Zellmorphologie.

Die Polymerisatzusammensetzung enthält 0,01 bis 3 Gew.-%, vorzugsweise 0,05 bis 1 Gew.-% Nukleierungsmittel, bezogen auf die gesamte Masse.

Die erfindungsgemäß hergestellten Granulate werden zu Partikel(Hart)schaumstoffen weiterverarbeitet.

Die Partikel(Hart)schaumstoffe bedeuten in diesem Zusammenhang Schaumstoffe, Hartschaumstoffe, Partikelschaumstoffe und Partikelhartschaumstoffe, die auf Basis von Polymeren mit einer Glasübergangstemperatur nach ISO 11357-2 von mindestens 180°C hergestellt werden.

Bedingt durch die bessere Qualität der Granulate, insbesondere die Minimierung der Fehlstellen im Granulat oder an der Oberfläche der Granulate, werden Partikel(Hart)schaumstoffe mit besonders gleichmäßiger Porengrößenverteilung erhalten.

Die nach dem erfindungsgemäßen Verfahren hergestellten Partikel(Hart)schaumstoffe aus mindestens einem Polymer mit einer Glasübergangstemperatur nach ISO 11357-2 von mindestens 180°C finden in der Konstruktion von Raum- oder Luftfahrzeugen, dem Schiffsbau, Schienenfahrzeugbau oder dem Fahrzeugbau, insbesondere in der Elektromobilität, in deren Exterieur Verwendung. Weiterhin können mit diesen Partikel(Hart)schaumstoffen Verbundmaterialien hergestellt werden, die in die ebenfalls in diese Anwendungen gehen können. Partikel(Hart)schaumstoffe aus mindestens einem Polymer mit einer Glasübergangstemperatur nach ISO 11357-2 von mindestens 180°C sind darüber hinaus besonders dazu geeignet, auch im Außenbereich eines Luftfahrtzeugs eingebaut zu werden. Außenbereich meint dabei nicht nur als Füllung in der Außenhaut eines Luftfahrzeugs, sondern insbesondere auch in einer Flugzeugnase, im Heckbereich, in den Tragflächen, in den Außentüren, in den Rudern oder in Rotorblättern. Insbesondere aufgrund der schweren Entflammbarkeit können die erfindungsgemäß hergestellten Partikel(Hart)schaumstoffe bzw. Verbundmaterialien auch im Innenraum dieser Fahrzeuge verbaut werden.

Die Partikel(Hart)schaumstoffe auf Basis von Polymeren mit einer Glasübergangstemperatur nach ISO 11357-2 von mindestens 180°C eignen sich insbesondere dazu, im Innenbereich eines Luftfahrtzeugs eingebaut zu werden. Luftfahrzeug umfasst dabei insbesondere neben Jets oder Kleinflugzeugen auch Hubschrauber oder sogar Raumfahrzeuge. Beispiele für den Verbau im Innenraum eines solchen Luftfahrzeugs sind zum Beispiel die herausklappbaren Tabletts auf der Sitzrückseite einer Passagiermaschine, die Füllung eines Sitzes oder einer Zwischenwand, sowie beispielsweise in innenliegenden Türen.

Das vorliegende Verfahren und die damit erzeugten Partikel(Hart)schaumstoffe sind insbesondere für Hochtemperaturanwendungen geeignet.

### Beispiele

### Beispiel 1

### Unterwassergranulierung von Polyetherimid Typ Ultem 1000

Polyetherimid (PEI) (Ultem 1000, SABIC, Niederlande), mit einer Glasübergangstemperatur von 217°C, gemessen nach ISO 11357-2 (Veröffentlichung: 2014-07), wird in einen Vorlagebehälter eines Extruders (Automatic Single Screw APM E1-180) gegeben. Die Extrusion erfolgt bei ca. 370-375°C und einem Druck von 15 bar. Der Durchsatz beträgt 160 kg/h. Über eine Lochplatte wird die Schmelze einer Unterwassergranulierung (SPHERO 70, MAAG Automatik GmbH, Germany) zugeführt. Der Druck an der Düse liegt vor der Lochplatte bei ca. 195 bar. Die Granulierung wird mit 9 Messern bei 2000 1/min durchgeführt.

Die Unterwassergranulierung erfolgt in zwei Prozesswasserkreisläufen. In einem ersten Hochtemperaturkreislauf beträgt die Prozesswassertemperatur ca. 140°C bei einem Druck von ca. 4,95 bar. Im zweiten Kreislauf beträgt die Prozesswassertemperatur ca. 70°C bei einem Druck von ca. 2,5 bar. Die Verweilzeit beträgt in beiden Kreisläufen jeweils ca. 8 s.

Im Anschluss wird das Granulat in einem Zentrifugaltrockner (CENTRO 300, MAAG Automatik GmbH, Germany) getrocknet. Die Restfeuchte beträgt 0,30 bis 0,47 %.

## Patentansprüche

1. Verfahren zur Herstellung von Partikel/Hart)schaumstoffen mittels einer Unterwassergranulierung aus einer Polymerisatzusammensetzung mit mindestens einem Polymer, welches eine Glasübergangstemperatur nach ISO 11357-2 (Veröffentlichung: 2014-07) von mindestens 180°C aufweist, wobei die Polymerschmelze des Extruders
a) in einem unter Druck stehenden ersten Wasserkreislauf gefördert wird, wobei der Druck im Bereich von 0,2 bis 30 bar und die Wassertemperatur im Wasserkreislauf im Bereich von 105°C bis 180°C liegt, und
b) granuliert wird,
**dadurch gekennzeichnet, dass**
c) das Granulat einem zweiten Wasserkreislauf zugeführt wird, der eine Temperatur unter 100°C aufweist und
1) drucklos oder
2) unter Druck im Bereich von 0,2 bis 30 bar betrieben wird.

2. Verfahren zur Herstellung von Partikel(Hart)schaumstoffen gemäß Anspruch 1, **dadurch gekennzeichnet, dass** das Polymer mit einer Glasübergangstemperatur nach ISO 11357-2 von mindestens 180°C ausgewählt ist aus der Gruppe Polysulfone oder Polyimide, insbesondere Polyethersulfon (PESU), Polyphenylsulfon (PPSU), Polysulfon (PSU), Polyetherimid (PEI), thermoplastische Polyimide und Mischungen davon.

3. Verfahren zur Herstellung von Partikel(Hart)schaumstoffen gemäß Anspruch 1, **dadurch gekennzeichnet, dass** die Polymerisatzusammensetzung ein Treibmittel enthält.

4. Verfahren zur Herstellung von Partikel(Hart)schaumstoffen gemäß Anspruch 3, **dadurch gekennzeichnet, dass** die Temperatur in Schritt a) mind 5°C unter Tg der treibmittelbeladenen Polymerschmelze liegt.

5. Verfahren zur Herstellung von Partikel(Hart)schaumstoffen gemäß Anspruch 3, **dadurch gekennzeichnet, dass** das Treibmittel aus der Gruppe bestehend aus flüchtigen organischen Verbindungen mit einem Siedepunkt bei Normaldruck unterhalb der Glasübergangstemperatur des Basismaterials, anorganischen Treibmitteln, thermisch zersetzbaren Treibmitteln und Mischungen der vorgenannten ausgewählt wird.

6. Verfahren zur Herstellung von Partikel(Hart)schaumstoffen gemäß Anspruch 1, **dadurch gekennzeichnet, dass** die Polymerisatzusammensetzung ein Nukleierungsmittel enthält.

7. Verfahren zur Herstellung von Partikel(Hart)schaumstoffen gemäß Anspruch 6, **dadurch gekennzeichnet, dass** das Nukleierungsmittel aus der Gruppe bestehend aus Talkum, Graphit, Ruß, Titandioxid und Mischungen der vorgenannten ausgewählt wird.

8. Verfahren zur Herstellung von Partikel(Hart)schaumstoffen gemäß Anspruch 1, **dadurch gekennzeichnet, dass** das erhaltene Granulat nach Schritt b) ausgeschleust und einer Trocknung zugeführt wird.

9. Verfahren zur Herstellung von Partikel(Hart)schaumstoffen gemäß Anspruch 1, **dadurch gekennzeichnet, dass** das erhaltene Granulat nach Schritt c) ausgeschleust und einer Trocknung zugeführt wird.

10. Verwendung von Partikel(Hart)schaumstoffen, hergestellt nach dem Verfahren gemäß Anspruch 1, in der Luft- und Raumfahrt, dem Schiffsbau, Fahrzeugbaus, insbesondere in der Elektromobilität.

## Claims

1. Process for producing (rigid) particle foams using an underwater pelletization system from a polymer composition comprising at least one polymer having a glass transition temperature according to ISO 11357-2 (published: 2014-07) of at least 180°C, wherein the polymer melt of the extruder
a) is conveyed into a first water circuit that is pressurized, the pressure being within a range from 0.2 to 30 bar and the water temperature in the water circuit being within a range from 105°C to 180°C, and
b) is pelletized,
**characterized in that**
c) the pelletized material is supplied to a second water circuit that has a temperature below 100°C and is operated
1) unpressurized or
2) under a pressure within a range from 0.2 to 30 bar.

2. Process for producing (rigid) particle foams according to Claim 1, **characterized in that** the polymer having a glass transition temperature according to ISO 11357-2 of at least 180°C is selected from the group of polysulfones or polyimides, in particular polyethersulfone (PESU), polyphenylsulfone (PPSU), polysulfone (PSU), polyetherimide (PEI), thermoplastic polyimides and mixtures thereof.

3. Process for producing (rigid) particle foams according to Claim 1, **characterized in that** the polymer composition comprises a blowing agent.

4. Process for producing (rigid) particle foams according to Claim 3, **characterized in that** the temperature in step a) is at least 5°C below the Tg of the blowing agent-containing polymer melt.

5. Process for producing (rigid) particle foams according to Claim 3, **characterized in that** the blowing agent is selected from the group consisting of volatile organic compounds having a boiling point at standard pressure below the glass transition temperature of the base material, inorganic blowing agents, thermally decomposable blowing agents and mixtures of the above.

6. Process for producing (rigid) particle foams according to Claim 1, **characterized in that** the polymer composition comprises a nucleating agent.

7. Process for producing (rigid) particle foams according to Claim 6, **characterized in that** the nucleating agent is selected from the group consisting of talc, graphite, carbon black, titanium dioxide and mixtures of the above.

8. Process for producing (rigid) particle foams according to Claim 1, **characterized in that** the pelletized material obtained is after step b) discharged and supplied to a drying process.

9. Process for producing (rigid) particle foams according to Claim 1, **characterized in that** the pelletized material obtained is after step c) discharged and supplied to a drying process.

10. Use of (rigid) particle foams produced by the process according to Claim 1 in the aerospace industry, for shipbuilding, for vehicle construction, particularly in electromobility.

## Revendications

1. Procédé de fabrication de mousses (rigides) particulaires par une granulation sous l'eau à partir d'une composition de polymères comportant au moins un polymère qui présente une température de transition vitreuse selon ISO 11357-2 (Publication : 2014-07) d'au moins 180 °C, la masse fondue de polymère de l'extrudeuse
a) étant refoulée dans un premier circuit d'eau sous pression, la pression étant comprise dans la plage de 0,2 à 30 bar et la température de l'eau du circuit d'eau étant comprise dans la plage de 105 °C à 180 °C, et
b) subissant une granulation,
**caractérisé en ce que**
c) le granulé est envoyé à un deuxième circuit d'eau, qui présente une température inférieure à 100 °C, et est exploité
1) sans pression ou
2) sous une pression dans la plage de 0,2 à 30 bar.

2. Procédé de fabrication de mousses (rigides) particulaires selon la revendication 1, **caractérisé en ce que** le polymère ayant une température de transition vitreuse selon ISO 11357-2 d'au moins 180 °C est choisi dans le groupe polysulfones ou polyimides, en particulier polyéthersulfone (PESU), polyphénylsulfone (PPSU), polysulfone (PSU), polyétherimide (PEI), polyimides thermoplastiques et mélanges de ceux-ci.

3. Procédé de fabrication de mousses (rigides) particulaires selon la revendication 1, **caractérisé en ce que** la composition de polymères contient un agent porogène.

4. Procédé de fabrication de mousses (rigides) particulaires selon la revendication 3, **caractérisé en ce que** la température dans l'étape a) est d'au moins 5 °C inférieure à la Tg de la masse fondue de polymère chargée en agent porogène.

5. Procédé de fabrication de mousses (rigides) particulaires selon la revendication 3, **caractérisé en ce que** l'agent porogène est choisi dans le groupe consistant en les composés organiques volatils ayant un point d'ébullition sous la pression normale inférieure à la température de transition vitreuse du matériau de base, les agents porogènes inorganiques, les agents porogènes thermodégradables et les mélanges des agents porogènes ci-dessus.

6. Procédé de fabrication de mousses (rigides) particulaires selon la revendication 1, **caractérisé en ce que** la composition de polymères contient un agent de nucléation.

7. Procédé de fabrication de mousses (rigides) particulaires selon la revendication 6, **caractérisé en ce que** l'agent de nucléation est choisi dans le groupe consistant en le talc, le graphite, le noir de carbone, le dioxyde de titane et les mélanges de ceux-ci.

8. Procédé de fabrication de mousses (rigides) particulaires selon la revendication 1, **caractérisé en ce que** le granulé obtenu est évacué après l'étape b) et envoyé à un séchage.

9. Procédé de fabrication de mousses (rigides) particulaires selon la revendication 1, **caractérisé en ce que** le granulé obtenu est évacué après l'étape c) et envoyé à un séchage.

10. Utilisation de mousses (rigides) particulaires fabriquées par le procédé selon la revendication 1 en navigation aérienne et spatiale, en construction navale, en construction de véhicule, en particulier en électromobilité.
